# EUROPÄISCHE PATENTANMELDUNG

(11) **EP 1 500 962 A2**
(43) Veröffentlichungstag der Anmeldung: **26.01.2005**
(21) Anmeldenummer: 04015825.5
(22) Anmeldetag: 06.07.2004
(51) Int. Cl.: G02B 21/00, G02B 21/06

(54) **Laser-Scanning-Mikroskop mit mindestens vier Einkoppelstellen zu Beleuchtungszwecken**

(30) Priorität: 11.07.2003 DE 10332063
(71) Anmelder: CARL ZEISS JENA GmbH, 07745 Jena (DE)
(72) Erfinder: Lange, Ralph, 07743 Jena (DE); Wilhelm, Stefan, 07745 Jena (DE); Mehner, Thomas, 99510 Kleinromstedt (DE); Wolleschensky, Ralf, 99510 Apolda (DE); Engelmann, Ralf, 07745 Jena (DE)

(57) **Zusammenfassung**

Laser- Scanning-Mikroskop mit mindestens vier separaten Einkoppelstellen (Port IR,Port FR,Port RGB,Port UV,Port V) für Beleuchtungswecke mit licht aus Wellenlängenbereichen im UV, im sichtbaren Bereich und im IR Bereich sowie vorteilhaft mindestens zwei individuell verschiebbaren Kollimatoren (K01,K02,K03,K04,K05) zur Erzielung einer maximalen Flexibilität bei der Auswahl an Farbstoffen und Auswertemethoden, vorzugsweise
zur Darstellung von cellulären Calcium und den zugehörigen Rezeptoren in lebendem Gewebe über lange Zeiträume (time lapse) mit Infrarot- und UV-Lasern, wobei Fluoreszenzdetektion und Uncaging zur Anwendung kommen,
zur Freisetzung von Pharmaka (Uncaging) und IR-Beleuchtung mit Transmissionsdetektion,
zur Realisierung von Applikationen mit fluoreszierenden Proteinen der (G)FP-Familie incl. Photoaktivierung von GFP und CFP/YFP-FRET,
zur Verwendung von CY 5.5-Farbstoffen im dunklroten Bereich (Laser 675nm) für die Tumorforschung.

## Beschreibung

Die Bestrahlung insbesondere biologischer Proben mit mehreren Laserlinien erlaubt es, Zellen schonend mit IR-Licht zu beobachten und gleichzeitig punktuell Pharmaka mit UV-Licht freizusetzen (Uncaging).
Die Beobachtung kann dabei mit Transmissionsdetektion wie auch mit Auflicht-Fluoreszenzdetektion am Laser-Scanning-Mikroskop erfolgen.

Der kombinierte Einsatz solch weit entfernter Wellenlängen erlaubt neue wissenschaftliche Nachweismethoden vor allem zur Untersuchung der Physiologie von lebenden Zellen und Nervenzellen sowie zur funktionellen Architektur von komplexen Hirnarealen.

Leite et. al. beschreiben in Gastroenterology 2002 Feb; 122(2):415-27 die Darstellung von zellulären Calcium und den zugehörigen Rezeptoren in lebendem Gewebe über lange Zeiträume (time lapse) am Laser-Scanning-Mikroskop mit Infrarot- und UV-Lasern, wobei Fluoreszenzdetektion und Uncaging zur Anwendung kommen.

Dodt et al. beschreiben in Neuroreport 2003 Mar 24; 14(4):623-7 die Darstellung von synaptischen Verbindungen im Kortex der Ratte, wobei ein Methodenmix aus elektrischen Ableitungen (Patch Clamp) und Laser-Scanning-Mikroskopie mit UV-Lasern zur Freisetzung von Pharmaka (Uncaging) und IR-Beleuchtung mit Transmissionsdetektion zur Anwendung kommt. Zusätzlich werden auch Infrarot-Laser zur Stimulation von Nervenzellen benutzt.

### Anwendungsbeispiele V ( sichtbares Licht)

Hanson und Kohler beschreiben in J Exp. Bot. 2001 Apr.; 52(356):529-39 moderne Anwendungsmöglichkeiten der (G) FP-Familie incl. Photoaktivierung von GFP und CFP/YFP-FRET (optimal: 432 nm).

Patterson und Lippincott-Schwartz beschreiben in Science 2002 Sep 13; 297(5588):1873-7 ein neues GFP welches mit Laserlinien 405 / 413 nm photoaktiviert werden kann. Anwendungen in Zell- und Entwicklungsbiologie.

### Anwendungsbeispiele FR ( Fernrotbereich)

Petrovsky et al. beschreiben in Cancer Res 2003 Apr 15; 63(8): 1936-42 die Verwendung von CY 5.5-Farbstoffen im dunkelroten Bereich (Laser 675 nm) für die Tumorforschung, wobei die lange Wellenlänge Vorteile bezüglich Gewebeschonung und optischer Eindringtiefe bietet.

Es sind gerätetechnische Lösungen für Laser-Scanning-Mikroskope bekannt, in denen maximal 3 Eingangsports für die Beleuchtung mit unterschiedlichen Wellenlängen realisiert sind.
In DE 19702753 A1 ist ein LSM Strahlengang mit zwei Eingangsports ausführlich beschrieben.

Stand der Technik ist es weiterhin, dass keine Mikroskop-Objektive verfügbar sind, die über den gesamten Spektralbereich von UV bis IR bezüglich chromatischer Längsaberration auskorrigiert sind. Das heißt die Fokusebenen für unterschiedliche Spektralbereiche liegen mehr oder weniger in unterschiedlichen z-Ebenen, so das keine bezüglich den Anforderungen der konfokalen Mikroskopie zufriedenstellende Abbildung erreichbar wäre.

Generell besteht für die konfokale Laser-Scanning-Mikroskopie die Forderung die verschiedenen Laserlichtquellen aus dem Bereich UV bis IR über polarisationserhaltende Single-Mode Fasern in das in das Gerät einzukoppeln. Hierbei soll die Applikationsbandbreite von LSM erweitert werden.

Aus den unter 1) beschriebenen Applikationen wird deutlich, dass neben Laserwellenlängen im UV VIS und IR auch Laserwellenlängen bei 405 / 413 / 432 nm, sowie 675 nm verfügbar sein müssen, um die volle applikative Bandbreite abzudecken.

Gemäß dem Stand der Technik auf dem Gebiet der Faseroptik können diese Wellenlängen vorteilhaft durch Unterteilung in die nachfolgend dargestellten Bereiche über polarisationserhaltende Single-Mode Fasern transportiert werden:
1. 350 nm-380 nm (UV) / Laserlinien 351 nm bis 380 nm
2. 400 nm-445 nm (V) / Laserlinien 400 bis 442 nm
3. 455 nm - 635 nm (VIS) / Laserlinien 458 bis 635 nm
4. 650 nm - 680 nm (FR) / Laserlinien 650, 675 nm
5. 690 nm - 1100 nm (IR) / durchstimmbarer TiSa Laser

Die spektrale Lücke zwischen den Wellenlängenbereichen ist vorteilhaft, um über entsprechende Strahlteiler eine Trennung der Spektralbereiche zu gewährleisten (minimale Kantensteilheit der Strahlvereiniger im Bereich zwischen 10 nm und 20 nm)

Entsprechend werden zur Umsetzung der applikativen Forderungen vorzugsweise fünf oder mehr Faser-Koppelports K1-K5 eingesetzt.. Gleichzeitig kann jeder Koppelport eine in z-Richtung verschiebbare Kollimations - Optik KO1-5 um das divergent aus jedem Quellpunkt (jeweilige Faserendfläche) austretende Laserlicht zu kollimieren, und um je nach verwendetem Mikroskopobjektiv und verwendeter Wellenlängen, die Faserendflächen optimal in eine einzige Fokusebene abzubilden. Weiterhin ist die beschriebene Unterteilung in 5 Spektralbereiche insofern vorteilhaft, als das dadurch eine breite Palette von Objektiven mit unterschiedlichster chromatischer Korrektion für die konfokale Mikroskopie nutzbar gemacht werden kann. Mit einer verfügbaren Faser im Wellenlängenbereich 400 - 640 nm kann die Zahl der Koppelports auch verringert werden, beispielsweise auf vier.
Allerdings ist es vorteilhaft, mehr als drei Koppelports anzuordnen, weil hierdurch der Einsatz jeweils gut chromatisch korrigierter Optik ermöglicht wird.

Die 5 Faser-Koppelports der hier beschriebenen Anordnung sind dabei in geschickter Weise so anzuordnen, dass für alle Quellpunkte (Faserendflächen) die Entfernung zur Objektivpupille identisch ist, um diese so in geeigneter Weise einheitlich in die Objektivpupille abbilden zu können und bezüglich Justierempfindlichkeit und Stabilität optimale Bedingungen zu erreichen.

Die Abbildung in die Objektivpupille hat weiterhin den Vorteil, das es bei z-Verschiebung des Kollimators zu keiner wesentlichen Änderung der Ausleuchtung im Bild kommt.
Die Strahlvereinigung auf einen gemeinsamen Strahl erfolgt aus Gründen der Langzeitstabilität über fest eingebaute, nicht justierbare dichroitische Schichten. Die Strahlvereiniger sitzen im parallelen bzw. je nach z-Position der Kollimationsoptiken im leicht konvergenten oder divergenten Strahlengang. Die Spektral bereiche sind dabei so anzuordnen, das die dichroitischen Schichten vorzugsweise als Lang-, bzw. Kurzpässe ausgeführt werden können und auf diese Weise sowohl die Herstellung zu vereinfachen, als auch aufgrund des weniger komplexen Schichtaufbaus gegenüber einfach, - oder Mehrfachbandpässen die Empfindlichkeit der spektralen Eigenschaften auf Veränderung der Umweltbedingungen minimal zu halten.

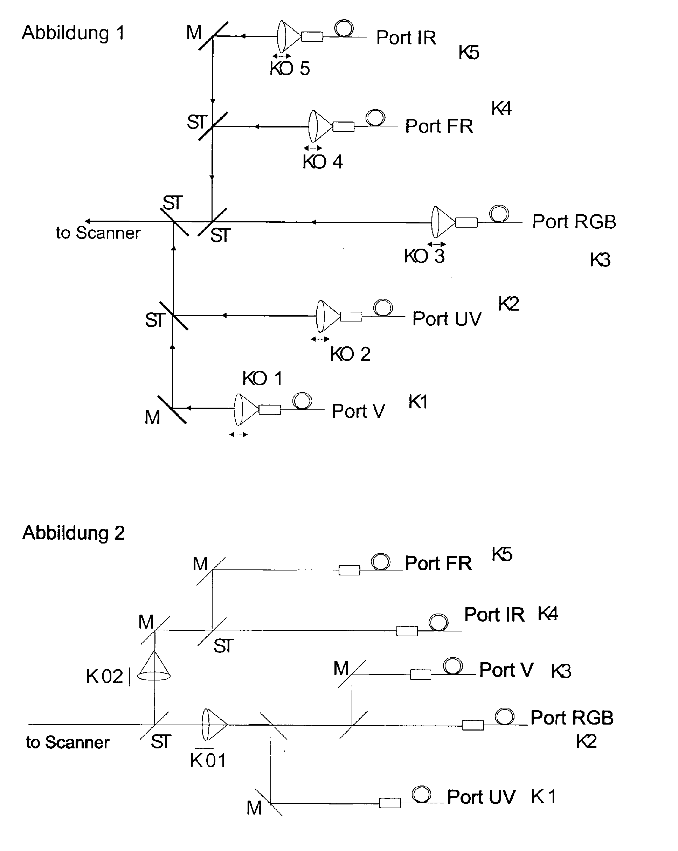

Abbildung 1 zeigt die Anordnung der Koppelports bei individuellen Kollimatoren für jedes Port sowie die Strahlvereinigung über die Strahlteiler ST und die Spiegel M.

Bei entsprechend chromatisch korrigierten Mikroskopobjektiven ist es ebenfalls denkbar einzelne Spektralbereiche zusammenzufassen und insgesamt nur jeweils eine Kollimationslinse für die Spektralbereiche UV / V / RGB und FR / IR zu verwenden.
Ebenfalls denkbar ist es bei Weiterentwicklungen auf dem Gebiet der Fasertechnik einzelne Faserkoppelports wie z.B. K2 und K3, oder K1 und K3, oder K2und K5, oder K 2, K 3und K 5 zusammenzufassen. Dies hat den Vorteil einer kompakteren Bauweise und eines geringeren mechanischen Aufwandes bei allerdings eingeschränkter Funktionalität. Die Strahlvereiniger ST sitzen in diesem Fall im streng divergenten Strahlengang zwischen Faserendflächen und verfahrbaren Kollimationsoptiken KO 1 bzw. KO 2.
Abbildung 2 zeigt die Anordnung für 5 FaserKoppelports schematisch.

## Patentansprüche

1. Laser-Scanning-Mikroskop mit mindestens vier separaten Einkoppelstellen für Wellenlängenbereiche im UV, im sichtbaren Bereich und im IR Bereich.

2. Laser-Scanning-Mikroskop, mit mindestens 4 Einkoppelstellen zu Beleuchtungszwecken mit Laserlicht,
sowie mindestens zwei individuell verschiebbaren Kollimatoren zur Erzielung einer maximalen Flexibilität bei der Auswahl an Farbstoffen und Auswertemethoden

3. Laser-Scanning-Mikroskop zur Darstellung von zellulären Calcium und den zugehörigen Rezeptoren in lebendem Gewebe über lange Zeiträume (time lapse)mit Infrarot- und UV-Lasern, wobei Fluoreszenzdetektion und Uncaging zur Anwendung kommen, bestehend aus mindestens vier separaten Einkoppelstellen für UV, V, VIS, FR, IR Strahlung.

4. Laser-Scanning-Mikroskop mit UV-Lasern zur Freisetzung von Pharmaka (Uncaging) und IR-Beleuchtung mit Transmissionsdetektion, bestehend aus mindestens vier separaten Einkoppelstellen für UV, V, VIS, FR, IR Strahlung Laser-Scanning-Mikroskop zur Realisierung von Applikationen mit fluoreszierenden Proteinen der (G) FP-Familie incl. Photoaktivierung von GFP und CFP/YFP-FRET, bestehend aus mindestens vier separaten Einkoppelstellen für UV, V, VIS, FR, IR Strahlung.

5. Laser-Scanning-Mikroskop zur Verwendung von CY 5.5-Farbstoffen im dunkelroten Bereich (Laser 675 nm) für die Tumorforschung, bestehend aus mindestens vier separaten Einkoppelstellen für UV, V, VIS, FR, IR Strahlung

6. Laser-Scanning-Mikroskop nach einem der vorangehenden Ansprüche, mit mindestens vier Einkoppelstellen für die Wellenlängenbereiche :
350 nm - 380 nm (UV)
400 nm - 445 nm (V)
450 nm - 635 nm (VIS)
650 nm - 680 nm (FR)
690 nm - 1100 nm (IR)

7. Laser-Scanning-Mikroskop nach einem der vorangehenden Ansprüche, wobei die Einkopplung über mindestens eine Lichtleitfaser erfolgt

8. Laser-Scanning-Mikroskop nach einem der vorangehenden Ansprüche, wobei eine wellenlängige Anpassung der Fokuslage über verschiebliche Kollimationsoptiken erfolgt.
